# EUROPEAN PATENT APPLICATION

(11) **EP 4 369 732 A1**
(43) Date of publication of application: **15.05.2024**
(21) Application number: 22837500.2
(22) Date of filing: 23.06.2022
(51) Int. Cl.: H04Q 9/00

(54) **DEVICE, METHOD, AND SYSTEM**

(30) Priority: 09.07.2021 JP 2021114546
(71) Applicant: DAIKIN INDUSTRIES, LTD., Osaka-Shi, Osaka 530-0001 (JP)
(72) Inventor: OCHI, Yasutaka, Osaka-shi, Osaka 530-0001 (JP); TSUBOI, Kosuke, Osaka-shi, Osaka 530-0001 (JP)
(74) Representative: Hoffmann Eitle
(86) International application number: PCT/JP2022/025128
(87) International publication number: WO 2023/282083

(57) **Abstract**

A notification of shutdown of a power is rapidly provided. An apparatus communicable with a server is such that a controller of the apparatus is configured to, upon shutdown of a power supplied to the apparatus, notify the server of the shutdown of the power.

## Description

### TECHNICAL FIELD

The present disclosure relates to apparatuses, methods, and systems.

### BACKGROUND ART

Communication adapters configured to collect data from air conditioners and the like and transmit the data to a server via the Internet have been known (the communication adapters are also called an edge of IoT (Internet of Things)). As a measure against shutdown of a power supplied to apparatuses such as communication adapters and the like, for example, PTL 1 discloses a method of avoiding suspension of operation for data communication through power supply from a secondary battery when an external power source is in an emergency state (i.e., no power is supplied).

### CITATION LIST

### PATENT LITERATURE

PTL 1: Japanese Laid-Open Patent Application No. 2002-171361

### SUMMARY OF INVENTION

### TECHNICAL PROBLEM

In the existing methods, however, data communication can be continued when the power supply is shut down, but it takes a certain period of time for a user or the like to know the shutdown of the power supply. In the present disclosure, it is an object to rapidly provide a notification of the shutdown of the power supply.

### SOLUTION TO PROBLEM

An apparatus according to a first aspect of the present disclosure is an apparatus communicable with a server, in which
a controller of the apparatus is configured to, upon shutdown of a power supplied to the apparatus, notify the server of the shutdown of the power.

According to the first aspect of the present disclosure, it is possible to rapidly provide a notification of the shutdown of the power.

Also, a second aspect of the present disclosure is the apparatus as described in the first aspect, in which
the apparatus is a communication adapter configured to be attached to a different apparatus and receive supply of the power from the different apparatus.

According to the second aspect of the present disclosure, it is possible to rapidly provide a notification of the shutdown of the power supplied to the communication adapter from the different apparatus.

Also, a third aspect of the present disclosure is the apparatus as described in the first aspect or the second aspect, in which
the apparatus includes a power storage.

According to the third aspect of the present disclosure, the apparatus can use the power storage upon the shutdown of the power.

Also, a fourth aspect of the present disclosure is the apparatus as described in the second aspect, in which
the different apparatus is an air conditioner.

According to the fourth aspect of the present disclosure, it is possible to rapidly provide a notification of the shutdown of the power supplied to the communication adapter from the air conditioner.

Also, a fifth aspect of the present disclosure is the apparatus as described in any one of the first aspect to the fourth aspect, in which
the controller notifies the server of the shutdown of the power a plurality of times after the shutdown of the power supplied to the apparatus.

According to the fifth aspect of the present disclosure, it is possible to notify the server of the shutdown of the power even if an error occurs during communication.

Also, a sixth aspect of the present disclosure is the apparatus as described in any one of the first aspect to the fifth aspect, in which
the controller does not perform a process of reception after the shutdown of the power supplied to the apparatus.

According to the sixth aspect of the present disclosure, the apparatus can perform a process of notification without performing the process of reception.

Also, a seventh aspect of the present disclosure is the apparatus as described in any one of the first aspect to the sixth aspect, in which
the controller does not store the shutdown of the power in a memory upon the shutdown of the power supplied to the apparatus.

According to the seventh aspect of the present disclosure, it is possible to save on power consumption because the controller does not store the shutdown of the power in the memory.

Also, an eighth aspect of the present disclosure is the apparatus as described in any one of the first aspect to the seventh aspect, in which
the controller restarts communication between the apparatus and the server upon restart of supply of the power to the apparatus.

According to the eighth aspect of the present disclosure, the server can detect the restart of the supply of the power to the apparatus based on the restart of the communication between the apparatus and the server.

Also, a ninth aspect of the present disclosure is the apparatus as described in any one of the first aspect to the eighth aspect, in which
the apparatus communicates with the server via wireless communication.

According to the ninth aspect of the present disclosure, it is possible to notify the server of the shutdown of the power without receiving influences from other devices compared to wired communication.

Also, a tenth aspect of the present disclosure is the apparatus as described in any one of the first aspect to the ninth aspect, in which
the controller determines whether or not a cause of the shutdown of the power is an instantaneous voltage drop.

According to the tenth aspect of the present disclosure, the apparatus can determine whether to notify the server of the shutdown of the power.

Also, a method according to an eleventh aspect of the present disclosure is a method performed by a controller of an apparatus communicable with a server, in which
the method includes, upon shutdown of a power supplied to the apparatus, notifying the server of the shutdown of the power.

Also, a system according to a twelfth aspect of the present disclosure is a system including a server and an apparatus communicable with the server, in which
a controller of the apparatus is configured to, upon shutdown of a power supplied to the apparatus, notify the server of the shutdown of the power.

Also, a thirteenth aspect of the present disclosure is the system as described in the twelfth aspect, in which
a controller of the server is configured to notify a user terminal of the shutdown of the power upon no communication between the apparatus and the server being restarted in a predetermined period after receipt of a notification of the shutdown of the power.

According to the thirteenth aspect of the present disclosure, the user can know the shutdown of the power.

Also, a fourteenth aspect of the present disclosure is the system as described in the twelfth aspect or the thirteenth aspect, in which
a controller of the server notifies a user terminal of restart of supply of the power to the apparatus upon communication between the apparatus and the server being restarted in response to restart of the supply of the power to the apparatus.

According to the fourteenth aspect of the present disclosure, the user can know the restart of the supply of the power.

### BRIEF DESCRIPTION OF DRAWINGS

[FIG. 1] FIG. 1 is a view illustrating the entire configuration according to one embodiment of the present disclosure.
[FIG. 2] FIG. 2 is a view illustrating a hardware configuration of a communication adapter according to one embodiment of the present disclosure.
[FIG. 3] FIG. 3 is a view illustrating a hardware configuration of a server and a user terminal according to one embodiment of the present disclosure.
[FIG. 4] FIG. 4 is a sequence diagram of a process performed by an air conditioning system according to one embodiment of the present disclosure.
[FIG. 5] FIG. 5 is a flowchart of a process performed by an apparatus according to one embodiment of the present disclosure.
[FIG. 6] FIG. 6 is a flowchart of a process performed by the server according to one embodiment of the present disclosure.

### DESCRIPTION OF EMBODIMENTS

Hereinafter, embodiments of the present disclosure will be described with reference to the drawings.

### <Explanations of terms>

- In the present specification, the shutdown of the power for the communication adapter is mainly described. However, the present disclosure is not limited to the communication adapter, and is applicable to shutdown of a power of a given apparatus.
- In the present specification, the "communication adapter" is an apparatus including a control function and a communication function. The communication adapter can be driven through power supply from a different apparatus (e.g., a heat source-side apparatus of the air conditioner (also called an outdoor unit)). Also, the communication adapter may include a power storage. Upon shutdown of the power supplied to the communication adapter from the different apparatus (e.g., a heat source-side apparatus of the air conditioner), the communication adapter can be driven using the power storage.

### <System configuration>

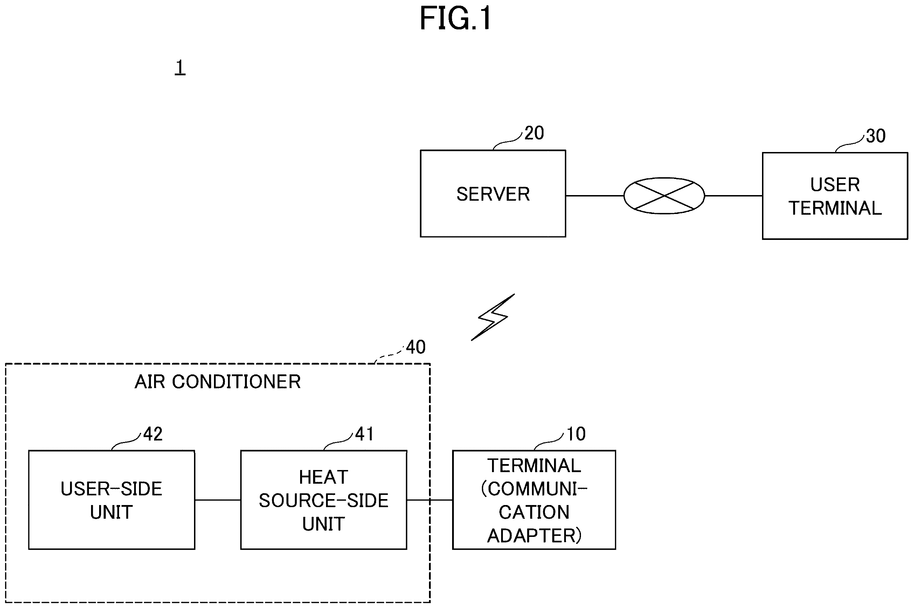

FIG. 1 is a view illustrating the entire configuration according to one embodiment of the present disclosure. An air conditioning system 1 includes a communication adapter (one example of the apparatus in which the power is shut down) 10, a server 20, a user terminal 30, and an air conditioner 40. The server 20 can transmit or receive data to or from the communication adapter 10 and the user terminal 30 via a given network. These will be described below.

### <<Communication adapter>>

The communication adapter 10 is an apparatus including a control function and a communication function. The communication adapter 10 can communicate with the server 20 through wireless communication such as LTE (Long Term Evolution) or the like. For example, the communication adapter 10 collects data from the air conditioner 40 (e.g., operation data of the air conditioner 40) and transmits the data to the server 20 via the Internet.

The communication adapter 10 receives supply of a power from the different apparatus (e.g., a heat source-side apparatus 41 of the air conditioner 40). Also, the communication adapter 10 includes a power storage 103 (which will be described below in detail). Upon the shutdown of the power supplied to the communication adapter 10 from the different apparatus (e.g., the heat source-side apparatus 41 of the air conditioner 40), the communication adapter 10 notifies the server 20 of the shutdown of the power using the power storage 103.

### <<Server>>

The server 20 manages the status of the supply of the power to the communication adapter 10 based on information from the communication adapter 10. Specifically, the server 20 receives a notification of the shutdown of the power from the communication adapter 10. The server 20 is formed of one or more computers.

Also, the server 20 notifies the user terminal 30 of the shutdown of the power. For example, the server 20 can notify the user terminal of the shutdown of the power upon no communication between the communication adapter 10 and the server 20 being restarted in a predetermined period after receipt of the notification of the shutdown of the power from the communication adapter 10.

Also, the server 20 notifies the user terminal 30 of restart of the supply of the power to the communication adapter 10 from the different apparatus (e.g., the heat source-side apparatus 41 of the air conditioner 40). For example, the server 20 can notify the user terminal 30 of restart of the supply of the power to the communication adapter 10 upon communication between the communication adapter 10 and the server 20 being restarted in response to the restart of the supply of the power to the communication adapter 10 from the different apparatus (e.g., the heat source-side apparatus 41 of the air conditioner 40).

### <<User terminal>>

The user terminal 30 is a device such as a smartphone, a tablet, a personal computer, or the like. The user terminal 30 receives, from the server 20, the notification of the shutdown of the power supplied to the communication adapter 10. Also, the user terminal 30 receives, from the server 20, the notification of the restart of the supply of the power to the communication adapter 10.

### <<Air conditioner>>

The air conditioner 40 is a given type of an air conditioner. The air conditioner 40 includes a heat source-side apparatus (also called an outdoor unit) 41 and a user-side apparatus (also called an indoor unit) 42. The communication adapter 10 is attached to the air conditioner 40 (e.g., the heat source-side apparatus 41).

### <Hardware configuration>

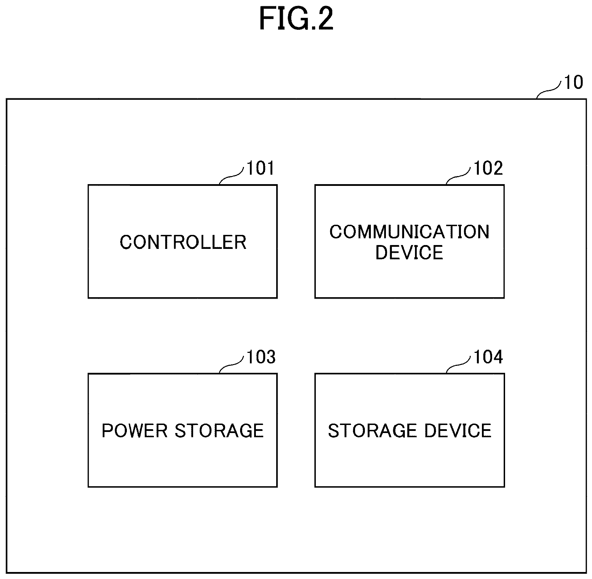

FIG. 2 is a view illustrating a hardware configuration of the communication adapter 10 according to one embodiment of the present disclosure. The communication adapter 10 includes a controller 101, a communication device 102, a power storage 103, and a storage device 104.

The controller 101 is a processor such as a CPU (Central Processing Unit) or the like. The controller 101 executes programs, and the processes described in the present specification are performed.

The communication device 102 is a transmitter and a receiver that communicate with the server 20 or the like via a given network (e.g., wireless communication such as LTE or the like).

The power storage 103 is used upon the shutdown of the power supplied to the communication adapter 10 from the different apparatus (e.g., the heat source-side apparatus 41 of the air conditioner 40). Specifically, the power storage 103 can supply the power to the communication adapter 10 upon the shutdown of the power supplied to the communication adapter 10 from the air conditioner 40 (e.g., the heat source-side apparatus 41). The power storage 103 is, for example, electric charges that are charged to an EDLC (electric double layer capacitor).

The storage device 104 is a memory in which the controller 101 stores data.

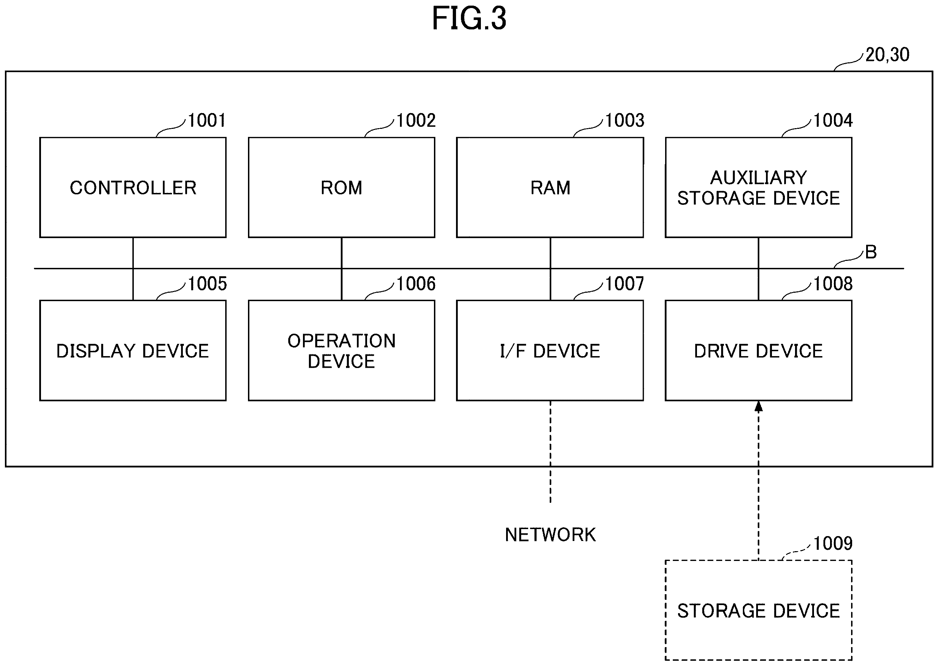

FIG. 3 is a view illustrating a hardware configuration of the server 20 and the user terminal 30 according to one embodiment of the present disclosure. The server 20 and the user terminal 30 each include a controller 1001, a ROM (Read Only Memory) 1002, and a RAM (Random Access Memory) 1003. The controller 1001, the ROM 1002, and the RAM 1003 form what is called a computer.

Also, the server 20 and the user terminal 30 may each include an auxiliary storage device 1004, a display device 1005, an operation device 1006, an I/F (Interface) device 1007, and a drive device 1008. Note that, the hardware components of each of the server 20 and the user terminal 30 are connected to each other via a bus B.

The controller (e.g., CPU) 1001 is a calculation device configured to execute various programs installed in the auxiliary storage device 1004. The controller 1001 executes the programs, and the processes described in the present specification are performed.

The ROM 1002 is a non-volatile memory. The ROM 1002 functions as a main storage device configured to store various programs, data, and the like necessary for the controller 1001 to execute various programs installed in the auxiliary storage device 1004. Specifically, the ROM 1002 functions as a main storage device that stores boot programs and the like such as BIOS (Basic Input/Output System), EFI (Extensible Firmware Interface), and the like.

The RAM 1003 is a volatile memory such as a DRAM (Dynamic Random Access Memory), a SRAM (Static Random Access Memory), or the like. The RAM 1003 functions as a main storage device configured to provide a work area to be developed when various programs installed in the auxiliary storage device 1004 are executed by the controller 1001.

The auxiliary storage device 1004 is an auxiliary storage device configured to store various programs and information to be used when various programs are executed.

The display device 1005 is a display device configured to display an internal status and the like of the server 20 and the user terminal 30.

The operation device 1006 is an input device with which an operator of the server 20 and the user terminal 30 inputs various commands to the server 20 and the user terminal 30.

The I/F device 1007 is a communication device configured to be connected to a network and communicate with other devices.

The drive device 1008 is a device in which a storage medium 1009 is set. As used herein, the storage medium 1009 includes media configured to electrically or magnetically record information, such as CD-ROMs, flexible disks, magneto-optical disks, and the like. Also, the storage medium 1009 may include semiconductor memories and the like configured to electrically record information, such as ROMs, flash memories, and the like.

Note that, various programs installed in the auxiliary storage device 1004 are installed, for example, by setting the storage medium 1009 delivered in the drive device 1008 and reading out various programs stored in the storage medium 1009 by the drive device 1008. Alternatively, various programs installed in the auxiliary storage device 1004 may be installed by being downloaded from a network via the I/F device 1007.

### <Process method>

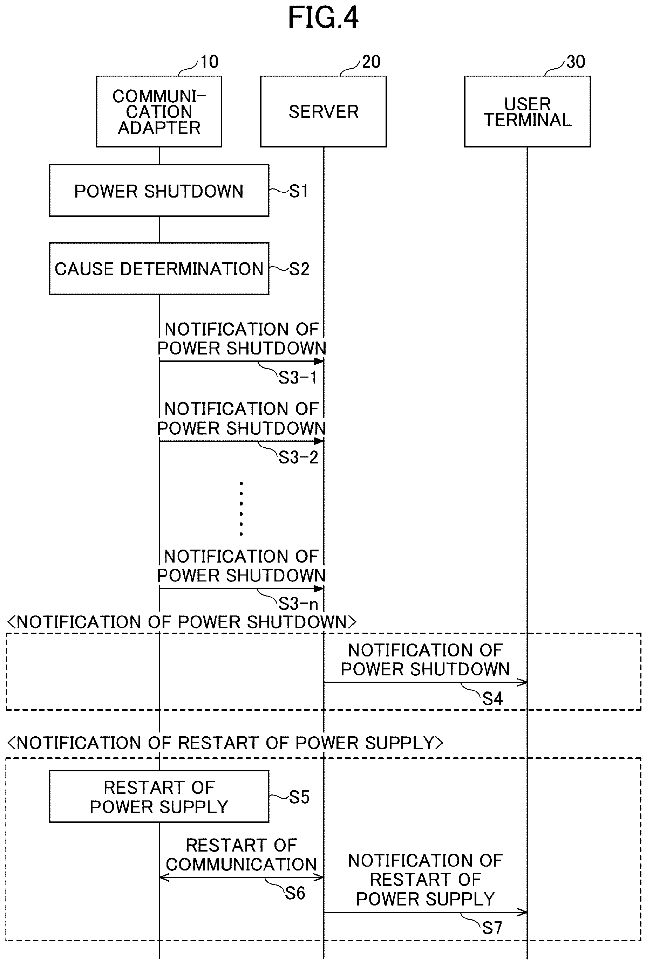

FIG. 4 is a sequence diagram of a process performed by the air conditioning system 1 according to one embodiment of the present disclosure.

In step 1 (S1), it is assumed that the power supplied to the communication adapter 10 from the different apparatus (e.g., the heat source-side apparatus 41 of the air conditioner 40) is shut down. Upon detecting the shutdown of the power supplied to the communication adapter 10 from the different apparatus (e.g., the heat source-side apparatus 41 of the air conditioner 40), the controller 101 of the communication adapter 10 may switch a power supply source from the different apparatus (e.g., the heat source-side apparatus 41 of the air conditioner 40) to the power storage 103.

Here, how to determine the shutdown of the power will be described. The controller 101 of the communication adapter 10 can determine the presence or absence of the shutdown of the power by AD-converting, and then taking into a microcomputer, the power voltage supplied to the communication adapter 10 from the different apparatus (e.g., the heat source-side apparatus 41 of the air conditioner 40) and detecting whether or not the obtained value is greater than a predetermined value.

Note that, upon the shutdown of the power supplied to the communication adapter 10 from the different apparatus (e.g., the heat source-side apparatus 41 of the air conditioner 40), the controller 101 of the communication adapter 10 does not store the shutdown of the power in the memory, and can save on power consumption of the power storage 103. However, upon the shutdown of the power supplied to the communication adapter 10 from the different apparatus (e.g., the heat source-side apparatus 41 of the air conditioner 40), the controller 101 of the communication adapter 10 may store the shutdown of the power in the memory.

In step 2 (S2), the controller 101 of the communication adapter 10 determines whether or not a cause of the shutdown of the power detected in S1 is an instantaneous voltage drop. Then, the controller 101 of the communication adapter 10 can notify the server 20 of the shutdown of the power when the cause of the shutdown of the power is not an instantaneous voltage drop (e.g., the cause is a power outage or a circuit breaker that is down).

For an instantaneous voltage drop, the shutdown time of the power is short. Thus, the controller 101 of the communication adapter 10 can determine whether or not the cause of the shutdown of the power detected in S1 is an instantaneous voltage drop based on the time taken for the restart of the supply of the power from the shutdown of the power (e.g., it is determined that the cause is an instantaneous voltage drop when the supply of the power is restarted within "XX" seconds).

A voltage drops in an instantaneous voltage drop, but the controller 101 of the communication adapter 10 can determine whether or not the cause of the shutdown of the power detected in S1 is an instantaneous voltage drop based on the magnitude and duration of drop in the voltage (e.g., it is determined that the cause is an instantaneous voltage drop when the voltage drops by "XX" percent or "YY" V or higher within "ZZ" seconds).

Note that, the controller 101 of the communication adapter 10 may determine whether or not the cause of the shutdown of the power detected in S1 is an instantaneous voltage drop based on the time taken for the restart of the supply of the power from the shutdown of the power and based on the magnitude of drop in the voltage.

In this way, the controller 101 of the communication adapter 10 does not notify the server 20 of the shutdown of the power when the shutdown of the power is immediately resolved (e.g., in the case of an instantaneous voltage drop caused by lightning or the like) and can notify the server 20 of the shutdown of the power when the shutdown of the power is not immediately resolved (e.g., in the case of a power outage or a circuit breaker that is down).

In step 3 (S3), the controller 101 of the communication adapter 10 notifies the server 20 of the shutdown of the power supplied to the communication adapter 10 from the different apparatus (e.g., the heat source-side apparatus 41 of the air conditioner 40). After the shutdown of the power supplied to the communication adapter 10 from the different apparatus (e.g., the heat source-side apparatus 41 of the air conditioner 40), the controller 101 of the communication adapter 10 can notify the server 20 of the shutdown of the power a plurality of times (S3-1, S3-2, ... , S3-n).

In this way, even if an error occurs during communication, the controller 101 of the communication adapter 10 can surely notify the server 20 of the shutdown of the power by notifying the server 20 of the shutdown of the power a plurality of times.

Note that, after the shutdown of the power supplied to the communication adapter 10 from the different apparatus (e.g., the heat source-side apparatus 41 of the air conditioner), the controller 101 of the communication adapter 10 may not perform a process of reception. Specifically, without awaiting a positive response (ACK) from the server 20 to the notification of the shutdown of the power, the controller 101 of the communication adapter 10 can notify the server 20 again of the shutdown of the power (e.g., the controller 101 of the communication adapter 10 can notify the server 20 again in S302 without awaiting a positive response (ACK) to the notification in S3-1). Therefore, it is possible to make many notifications for a period of time for which the power storage 103 can be used.

In step 4 (S4), the controller 1001 of the server 20 notifies the user terminal 30 of the shutdown of the power. For example, the controller 1001 of the server 20 can notify the user terminal of the shutdown of the power upon no communication between the communication adapter 10 and the server 20 being restarted in a predetermined period after receipt of the notification of the shutdown of the power from the communication adapter 10.

In step 5 (S5), it is assumed that the supply of the power to the communication adapter 10 is restarted. Upon detecting the restart of the power supplied to the communication adapter 10, the controller 101 of the communication adapter 10 may switch a power supply source from the power storage 103 to the different apparatus (e.g., the heat source-side apparatus 41 of the air conditioner 40).

In step 6 (S6), in response to the restart of the supply of the power in S5, communication between the communication adapter 10 and the server 20 is restarted.

In step 7 (S7), the controller 1001 of the server 20 notifies the user terminal 30 of the restart of the supply of the power to the communication adapter 10 from the different apparatus (e.g., the heat source-side apparatus 41 of the air conditioner 40). For example, the controller 1001 of the server 20 can notify the user terminal 30 of the restart of the supply of the power to the communication adapter 10 upon communication between the communication adapter 10 and the server 20 (i.e., usual communications other than the notification of the power shutdown) being restarted in response to the restart of the supply of the power to the communication adapter 10 from the different apparatus (e.g., the heat source-side apparatus 41 of the air conditioner 40).

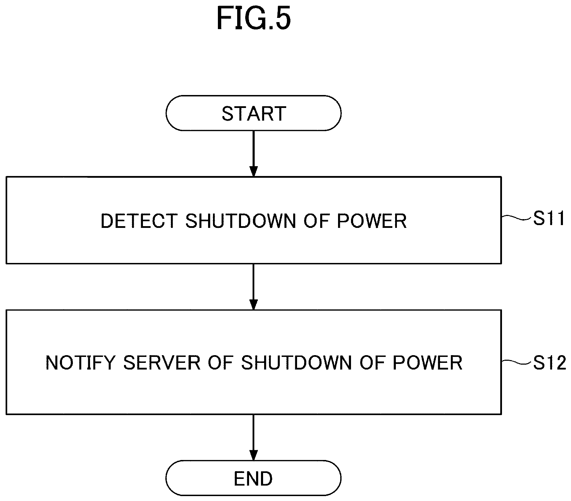

FIG. 5 is a flowchart of a process performed by the apparatus according to one embodiment of the present disclosure (e.g., the communication adapter 10) .

In step 11 (S11), the apparatus such as the communication adapter 10 or the like detects the shutdown of the power supplied to the apparatus such as the communication adapter 10 or the like. For example, the apparatus such as the communication adapter 10 or the like can determine whether or not the cause of the shutdown of the power is an instantaneous voltage drop.

In step 12 (S12), the apparatus such as the communication adapter 10 or the like notifies the server 20 of the shutdown of the power in accordance with the detection in S11. For example, after the shutdown of the power supplied to the apparatus such as the communication adapter 10 or the like, the apparatus such as the communication adapter 10 or the like can notify the server 20 of the shutdown of the power a plurality of times.

Subsequently, upon the restart of the supply of the power to the apparatus such as the communication adapter 10 or the like, communication between the apparatus such as the communication adapter 10 or the like, and the server 20 is restarted.

In this way, according to one embodiment of the present disclosure, the apparatus such as the communication adapter 10 or the like can notify the server 20 of the shutdown of the power upon the shutdown of the power supplied to the apparatus such as the communication adapter 10 or the like. Therefore, the server 20 can manage the status of the supply of the power to the apparatus such as the communication adapter 10 or the like based on information from the apparatus such as the communication adapter 10 or the like.

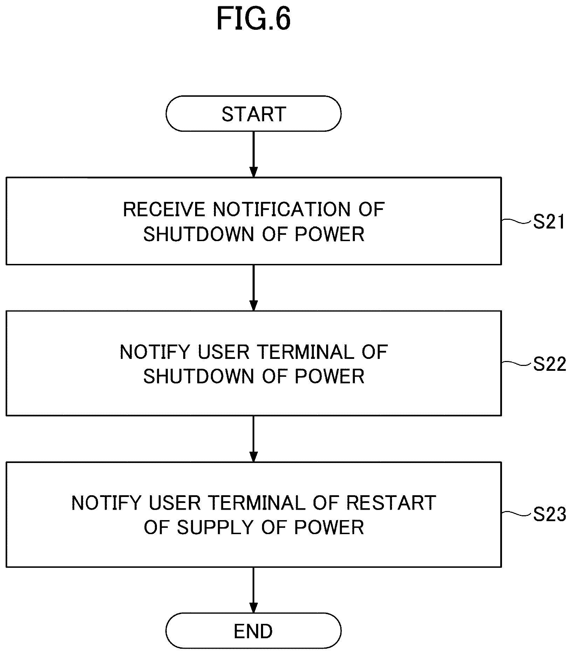

FIG. 6 is a flowchart of a process performed by the server 20 according to one embodiment of the present disclosure.

In step 21 (S21), the server 20 receives the notification of the shutdown of the power (the notification in S12 of FIG. 5) from the apparatus such as the communication adapter 10 or the like.

In step 22 (S22), the server 20 notifies the user terminal 30 of the shutdown of the power in accordance with the receipt of the notification in S21. For example, the server 20 can notify the user terminal of the shutdown of the power upon no communication between the apparatus such as the communication adapter 10 or the like, and the server 20 being restarted in a predetermined period after receipt of the notification of the shutdown of the power.

In step 23 (S23), the server 20 notifies the user terminal 30 of the restart of the supply of the power to the apparatus such as the communication adapter 10 or the like. For example, the server 20 can notify the user terminal 30 of the restart of the supply of the power to the apparatus such as the communication adapter 10 or the like upon communication between the apparatus such as the communication adapter 10 or the like, and the server 20 being restarted in response to the restart of the supply of the power to the apparatus such as the communication adapter 10 or the like.

In this way, according to one embodiment of the present disclosure, the server 20 can notify the user terminal 30 of the shutdown of the power for the apparatus such as the communication adapter 10 or the like in accordance with the notification from the apparatus such as the communication adapter 10 or the like. Therefore, an operator of the user terminal 30 (e.g., a service engineer of the air conditioner 40, a customer of the air conditioner 40 (e.g., a maintenance manager of the air conditioner 40), or a distributor of the air conditioner 40) can rapidly know the shutdown of the power for the apparatus such as the communication adapter 10 or the like.

While embodiments have been described above, it should be understood that various changes to the forms and details are possible without departing from the gist and scope of the claims recited.

The present international application claims priority based on Japanese Patent Application No. 2021-114546 filed on July 9, 2021, and the entire contents of Japanese Patent Application No. 2021-114546 are hereby incorporated by reference.

### REFERENCE SIGNS LIST

1 air conditioning system
10 communication adapter
20 server
30 user terminal
40 air conditioner
41 heat source-side apparatus
42 user-side apparatus
101 controller
102 communication device
103 power storage
104 storage device
1001 controller
1002 ROM
1003 RAM
1004 auxiliary storage device
1005 display device
1006 operation device
1007 I/F device
1008 drive device
1009 storage medium

## Claims

1. An apparatus communicable with a server, wherein
a controller of the apparatus is configured to, upon shutdown of a power supplied to the apparatus, notify the server of the shutdown of the power.

2. The apparatus according to claim 1, wherein
the apparatus is a communication adapter configured to be attached to a different apparatus and receive supply of the power from the different apparatus.

3. The apparatus according to claim 1 or 2, wherein
the apparatus includes a power storage.

4. The apparatus according to claim 2, wherein
the different apparatus is an air conditioner.

5. The apparatus according to any one of claims 1 to 4, wherein
the controller notifies the server of the shutdown of the power a plurality of times after the shutdown of the power supplied to the apparatus.

6. The apparatus according to any one of claims 1 to 5, wherein
the controller does not perform a process of reception after the shutdown of the power supplied to the apparatus.

7. The apparatus according to any one of claims 1 to 6, wherein
the controller does not store the shutdown of the power in a memory upon the shutdown of the power supplied to the apparatus.

8. The apparatus according to any one of claims 1 to 7, wherein
the controller restarts communication between the apparatus and the server upon restart of supply of the power to the apparatus.

9. The apparatus according to any one of claims 1 to 8, wherein
the apparatus communicates with the server via wireless communication.

10. The apparatus according to any one of claims 1 to 9, wherein
the controller determines whether or not a cause of the shutdown of the power is an instantaneous voltage drop.

11. A method, which is performed by a controller of an apparatus communicable with a server, the method comprising:
upon shutdown of a power supplied to the apparatus, notifying the server of the shutdown of the power.

12. A system, comprising:
a server; and
an apparatus communicable with the server, wherein
a controller of the apparatus is configured to, upon shutdown of a power supplied to the apparatus, notify the server of the shutdown of the power.

13. The system according to claim 12, wherein
a controller of the server is configured to notify a user terminal of the shutdown of the power upon no communication between the apparatus and the server being restarted in a predetermined period after receipt of a notification of the shutdown of the power.

14. The system according to claim 12 or 13, wherein
a controller of the server notifies a user terminal of restart of supply of the power to the apparatus upon communication between the apparatus and the server being restarted in response to restart of the supply of the power to the apparatus.
